# EUROPÄISCHE PATENTSCHRIFT

(11) **EP 3 374 653 B1**
(45) Veröffentlichungstag und Bekanntmachung des Hinweises auf die Patenterteilung: **11.12.2019**
(21) Anmeldenummer: 16790925.8
(22) Anmeldetag: 27.10.2016
(51) Int. Cl.: F16D 48/06

(54) **ELEKTROHYDRAULISCHE GETRIEBEKUPPLUNG EINES KRAFTFAHRZEUGS**
ELECTROHYDRAULIC TRANSMISSION CLUTCH OF A MOTOR VEHICLE
EMBRAYAGE DE BOÎTE DE VITESSES ÉLECTROHYDRAULIQUE D'UN VÉHICULE AUTOMOBILE

(30) Priorität: 09.11.2015 DE 102015222007
(43) Veröffentlichungstag der Anmeldung: 19.09.2018
(73) Patentinhaber: Audi AG, 85045 Ingolstadt (DE)
(72) Erfinder: JONUSCHEIT, Michael, 90403 Nürnberg (DE)
(86) Internationale Anmeldenummer: PCT/EP2016/075879
(87) Internationale Veröffentlichungsnummer: WO 2017/080834

(56) Entgegenhaltungen:
- EP-A1- 2 143 966
- DE-A1-102010 033 853
- DE-A1-102014 203 219
- FR-A1- 3 019 124
- US-B1- 6 647 332

## Beschreibung

Die Erfindung betrifft ein Verfahren zum Betreiben eher elektrohydraulischen Getriebekupplung eines Kraftfahrzeugs, mittels welcher eine Betätigung eines Kupplungspedals unterstützt wird. Zu der Erfindung gehören auch eine Steuervorrichtung für die Getriebekupplung sowie ein Kraftfahrzeug mit der Steuervorrichtung.

Eine Schwachstelle heutiger Kupplungsansteuerungen ist die Varianz des Druckaufbaus im Kupplungsweichbereich und -steifbereich. Dieses mangelhafte Druckfolgeverhalten führt im Fahrbetrieb zu Komforteinschränkungen und/oder Irritationen des Benutzers.

Für die Varianz ist in erster Linie das Schluckvolumen der Kupplung verantwortlich, welches durch das Volumen bestimmt wird, welches durch die Kupplungskolbenbewegung entsteht, um ein Ausrückelement der Kupplung zu bewegen. Mittels des Ausrückelements wird das Kupplungspaket bewegt. Der Kupplungsbereich zwischen dem Kupplungsgreifpunkt bis zum Steifbereich wird als Kupplungsweichbereich bezeichnet. Im Kupplungsweichbereich muss der Kupplungskolben für eine Druckänderung in der das Ausrückelement bewegenden Hydraulik weiter bewegt werden als im Steifbereich.

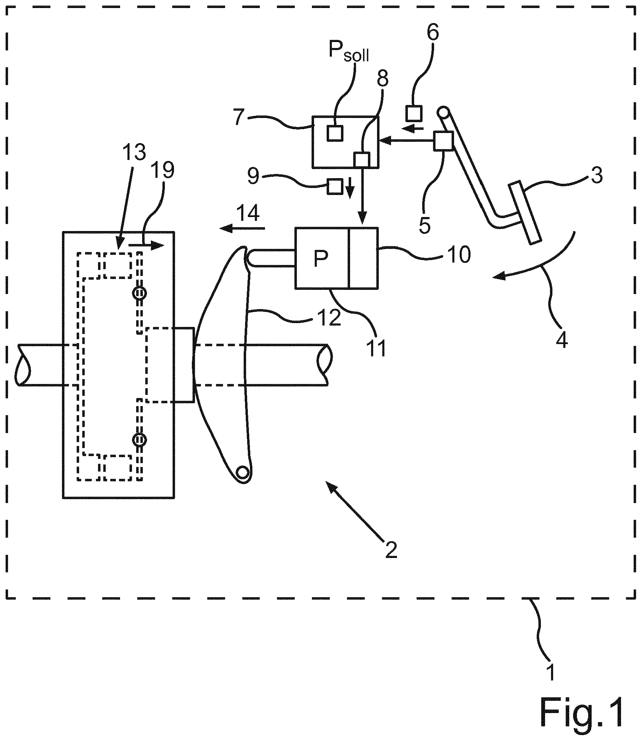

Diese Zusammenhänge sind noch einmal anhand von Fig. 1 bis Fig. 4 näher erläutert.

Fig. 1 zeigt von einem Kraftfahrzeug 1 eine Getriebekupplung 2 und ein Kupplungspedal 3. Bei einer Bewegung 4 des Kupplungspedals 3 wird diese Bewegung durch einen Sensor 5 erfasst, der in Abhängigkeit von der Bewegung 4 ein Kuppelsignal 6 des Kupplungspedals 3 erzeugt. Eine Steuervorrichtung 7 erzeugt an einem Stellausgang 8 ein Stellsignal 9, das an einen Aktor 10 der Getriebekupplung 2 übertragen wird. Der Aktor 10 kann beispielsweise auf der Grundlage einer elektrischen Maschine oder eines steuerbaren Ventils gebildet sein. Durch den Aktor 10 wird in Abhängigkeit von dem Stellsignal 9 ein hydraulischer Druck P eines hydraulischen Antriebs 11 mit einem Stößel 11' für ein Ausrückelement 12 der Getriebekopplung 2 eingestellt. Der Aktor 10 und der hydraulische Antrieb 11 stellen zusammen eine steuerbare Hydraulikeinrichtung dar. Mittels des Ausrückelements 12 wird in an sich bekannter Weise ein Kupplungspaket 13 bewegt, welches die eigentliche Kraftkopplung zwischen Motor und Getriebe bereitstellt und das beispielsweise die an sich bekannte Kupplungsdruckplatte mit dem Reibbelag umfassen kann.

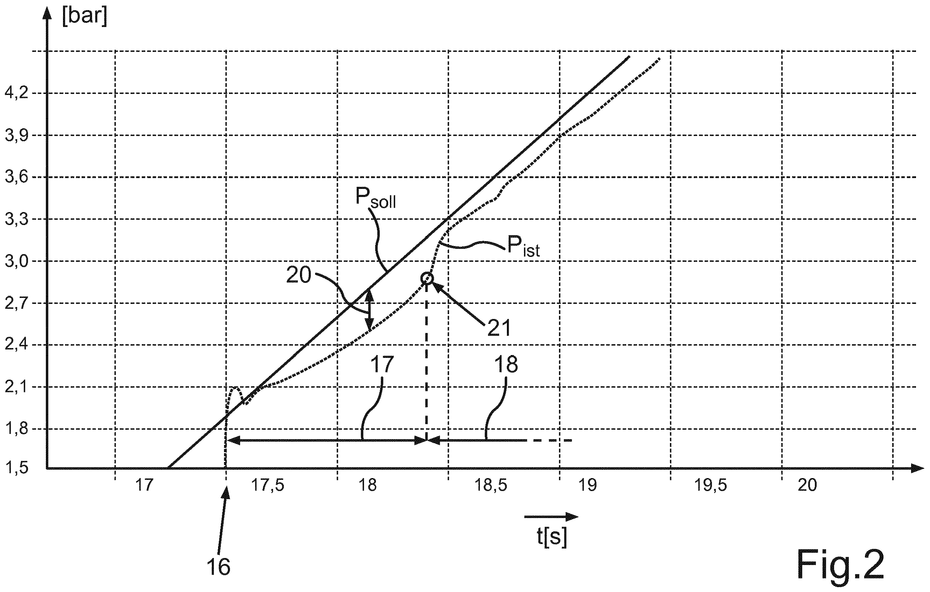

Zum Erzeugen des Stellsignals 9 wird durch die Steuervorrichtung 7 in Abhängigkeit von dem Kuppelsignal 6 ein Sollwertsignal Psoll für den Druck P erzeugt. Während der kontinuierlichen Bewegung 4 folgt der Druck P dem Sollwertsignal Psoll, aber anfangs nur verzögert. Dies ist in Fig. 2 veranschaulicht. Fig. 2 zeigt über der Zeit t den Verlauf des Sollwertsignals Psoll einerseits und den zeitlichen Verlauf des Drucks P. Der in Fig. 1 dargestellte schematische Aufbau der Getriebekupplung 2 ist nur beispielhaft. Entscheidend ist das in Fig. 2 veranschaulichte Verhältnis des Sollwertsignals Psoll zum Druck P.

Durch die Vergrößerung des Druckes P wird über den Stößel 11' eine Bewegung 14 des Ausrückelements 12 bewirkt, die nach Möglichkeit mit der Bewegung 4 des Kupplungspedals 3 korrespondieren soll. Die Bewegung beginnt an einem Greifpunkt 16, ab welchem das Kupplungspaket 13 auf die Bewegung des Ausrückelements 12 reagiert. Sodann ergibt sich ein Weichbereich 17, in welchem das Ausrückelement 12 im Verhältnis zu einem nachfolgenden Steifbereich 18 mehr bewegt werden muss, um eine vorbestimmten Weg einer Verstellbewegung 19 des Kupplungspakets 13 zu bewirken. Entsprechend viel Volumen an Hydraulikflüssigkeit muss in dem Hydraulikantrieb 11 bewegt werden. Daher kommt es zu der in Fig. 2 veranschaulichten Verzögerung oder dem Schleppfehler 20 zwischen dem Sollwertsignal Psoll und dem Druck P. Ab einem Steifpunkt 21 vergrößert sich das Verhältnis der Kupplungsbewegung 19 des Kupplungspakets 13 zur Bewegung 14 des Ausrückelements 12. Damit ist auch ein Verhältnis aus einer Druckänderung des Drucks P zu der Bewegung 14 des Ausrückelements 12 größer als im Weichbereich 17. Ab dem Steifpunkt bewegt sich der Kupplungskolben, der das Ausrückelement 12 bewegt, verhältnismäßig viel geringer.

Dies ist der Beginn des Steifbereichs 18, in welchem im Verhältnis zum Weichbereich weniger Hydraulikvolumen bewegt werden muss, um einen Druckanstieg zu bewirken. Im Weichbereich 17 ergibt sich also ein mangelhaftes Druckfolgeverhalten. Der beschriebene Vorgang ist dynamisch, das heißt er ist insbesondere nur während der Bewegung 4 des Kupplungspedals 3 bemerkbar. Deshalb ist hier von Bewegung und Änderung die Rede.

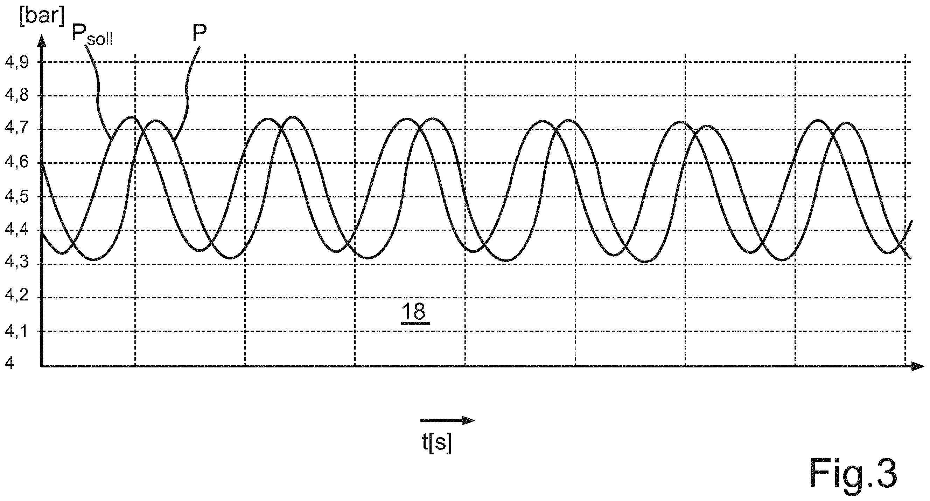

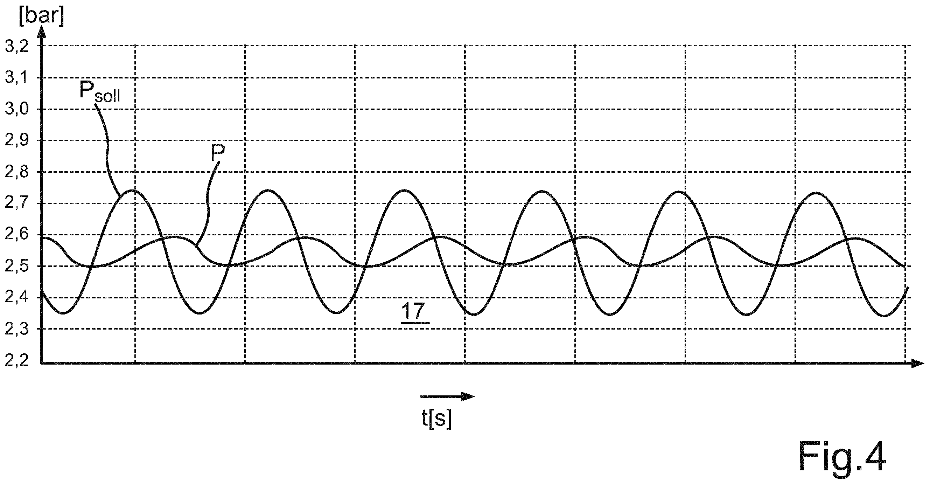

Dies ist in Fig. 3 und Fig. 4 veranschaulicht. Fig. 3 zeigt das Sollwertsignal Psoll und den zeitlichen Verlauf des Drucks P im Steifbereich 18 für eine periodische oder sinusförmige Bewegung des Kupplungspedals 3, wenn sich die Stellung des Ausrückelements 12 im Steifbereich 18 befindet. Fig. 4 zeigt dagegen das Sollwertsignal Psoll und den fertigen Verlauf des Drucks P im Weichbereich 17. Die Periodizität oder Frequenz der periodischen Bewegung 4 des Kupplungspedals 3 beträgt in dem gezeigten Beispiel 4 Hertz. Im Vergleich von Fig. 3 und Fig. 4 ist zu sehen, dass für diesen dynamischen Vorgang im Weichbereich 17 der Druck P dem Sollwertsignal Psoll mit einer geringeren Amplitude folgt als im Steifbereich 18.

Diesen Schleppfehler 20 oder das mangelhafte Druckfolgeverhalten möchte man gerne kompensieren.

Aus der DE 102 36 540 A1 ist ein Verfahren bekannt, was den Greifpunkt 16 in Abhängigkeit von einer Kupplungstemperatur bestimmt und bei der Ansteuerung einer Kupplung berücksichtigt.

Aus der DE 196 52 244 B4 ist ein Verfahren zum Bestimmen des Greifpunktes bekannt, was hierzu die Kupplung mit zwei unterschiedlichen Motormomenten beaufschlagt und aus einer Momentendifferenz den Greifpunkt 16 ermittelt.

Aus der EP 1 858 739 B1 ist bekannt, einen präzise angesteuerten Drehmomentpuls zu erreichen, indem eine Steuereinheit dazu vorgesehen ist, eine Temperatur der Kupplung zu erfassen und die Kupplungssollstellung abhängig von der erfassten Temperatur zu korrigieren.

Aus der DE 102 23465 A1 ist bekannt, für die Betätigung einer Kupplung eine Kennlinie abzulegen, die eine von einer Betätigungsvorrichtung eingestellte Sollstellung der Kupplung in Abhängigkeit von dem jeweils von der Kupplung zu übertragenden Moment festlegt. Das erforderliche, zu übertragende Moment ergibt sich aus dem Fahrerwunsch bzw. der Stellung des Fahrpedals und beispielsweise der von dem Sensor erfassten Last des Verbrennungsmotors sowie ggf. weiteren Betriebsparametern, wie der Drehzahl des Motors. Die Kennlinie ändert sich kurzzeitig, beispielsweise infolge von Temperaturänderungen, und langfristig im Verlauf der Lebensdauer der Kupplung, beispielsweise infolge von Verschleiß. Sie wird daher bei Vorliegen vorbestimmter Betriebsbedingungen nach unterschiedlichsten Strategien nachgestellt.

Darüber hinaus wird in der DE 10 2014 203 219 A1 ein Verfahren zum Betreiben eines Kupplungssystems eines Kraftfahrzeugs offenbart. Das Kupplungssystem ist hydrostatisch betätigbar und umfasst einen Elektromotor, mittels welchem ein hydrostatisch antreibbarer nicht selbsthaltender Kupplungsaktor bewegbar ist. Um den Kupplungsaktor bewegungslos zu halten, ist der Elektromotor mit einer Vorsteuerspannung beaufschlagbar. Mittels des Kupplungsaktors ist ein Druck einer Hydraulikflüssigkeit des Kupplungssystems einstellbar. Die Vorsteuerspannung wird in Abhängigkeit von einer Vorsteuerkennlinie ermittelt, wobei die Vorsteuerkennlinie einmalig an das hydrostatisch betätigte Kupplungssystem angepasst wird und über die Lebensdauer des hydrostatisch betätigten Kupplungssystems unverändert bleibt.

Aus der US 6 647 332 B1 ist ein Verfahren zum Steuern eines Drucks eines Fluids in einem Ventil und einer Kupplung bekannt. Bei dem Verfahren werden ein Ist-Druck des Fluids, eine gewünschte Kupplungseingabe sowie ein Kupplungsdruckschwellenwert ermittelt. Der Ist-Druck wird mit dem Kupplungsdruckschwellenwert verglichen und der Druck des Fluids in Abhängigkeit von dem Vergleich und der gewünschten Kupplungseingabe gesteuert. Der Druck des Fluids wird in Abhängigkeit von einem Algorithmus eingestellt, wobei der Algorithmus in Abhängigkeit von dem Vergleich aus einem ersten Algorithmus und einem zweiten Algorithmus ausgewählt wird. Die gewünschte Kupplungseingabe wird in Abhängigkeit von einer Stellung eines Kupplungspedals ermittelt.

Der Erfindung liegt die Aufgabe zugrunde, das Druckfolgeverhalten einer Getriebekupplung im Weichbereich dahingehend anzupassen, dass sich dort ein ähnliches Verhalten der Getriebekupplung wie im Steifbereich ergibt.

Die Aufgabe wird durch die Gegenstände der unabhängigen Patentansprüche gelöst. Vorteilhafte Weiterbildungen der Erfindung sind durch die Merkmale der abhängigen Patentansprüche, die folgende Beschreibung und die Figuren gegeben.

Durch die Erfindung ist ein Verfahren zum Betreiben einer elektrohydraulischen Getriebekupplung eines Kraftfahrzeugs bereitgestellt. Das Verfahren wird während eines Einkuppel- und/oder Auskuppelvorgangs durchgeführt, während welchem z.B. ein Kupplungspedal durch einen Fahrer bewegt wird. Im Folgenden ist einheitlich von einem Kuppelvorgang die Rede. Durch eine Reglereinrichtung einer Steuervorrichtung wird in Abhängigkeit von einem Kuppelsignal ein hydraulischer Druck eingestellt. Das Kuppelsignal kann z.B. durch einen Sensor in Abhängigkeit von einer Pedalstellung eines Kupplungspedals oder durch eine Getriebesteuerung eines Automatikgetriebes erzeugt werden. Durch den Druck wird in der beschriebenen Weise ein Ausrückelement der Getriebekupplung durch einen Weichbereich hindurch über einen Steifpunkt in einen Steifbereich oder umgekehrt bewegt. "Umgekehrt" meint, dass die Bewegung vom Steifbereich über den Steifpunkt durch den Weichbereich hindurch erfolgt. Hierbei ergibt sich das beschriebene Problem, dass während des dynamischen Kuppelvorgangs ein Verhältnis einer Druckänderung des Drucks P zur Bewegung des Ausrückelements im Weichbereich kleiner ist als im Steifbereich. Deshalb muss zum Verändern des Druckes P mehr Hydraulikflüssigkeit bewegt werden, während sich das Ausrückelement im Weichbereich befindet, damit sich der Druck auf einen bestimmten Solldruckwert einstellt. Mit anderen Worten folgt der Druckwert des Drucks dem Sollwertsignal der Reglereinrichtung mit einer Zeitkonstante. Mit anderen Worten gibt es beim Druckaufbau oder Druckabbau einen Schleppfehler zwischen dem aktuellen Sollwertsignal der Reglereinrichtung und dem tatsächlichen Druckwert oder dem Zeitverlauf des Drucks andererseits. Das Sollwertsignal der Reglereinrichtung ist deren Ausgabesignal, mittels welchem die besagte Hydraulikeinrichtung zum Einstellen des Drucks gesteuert werden kann. Beispielsweise kann die Hydraulikeinrichtung hierzu ein steuerbares Ventil aufweisen.

Um den Weichbereich zu kompensieren, um also im Weichbereich ein Verhältnis aus zeitlicher Veränderung des Kuppelsignals zur Druckveränderung ähnlich wie im Steifbereich zu machen, ist vorgesehen, dass die Reglereinrichtung in Abhängigkeit von dem Kuppelsignal ein vorläufiges Sollwertsignal für den Druck und die Steuervorrichtung eine zeitliche Ableitung des vorläufigen Sollwertsignals erzeugt. Die zeitliche Ableitung wird als ein Bewegungssignal verwendet. Das Bewegungssignal wird durch einen Multiplizierer mit einem Vorsteuerfaktor multipliziert, wobei das sich ergebende Produkt ein Vorsteuersignal ergibt. Des Weiteren weist das Bewegungssignal immer dann einen Wert ungleich 0 auf, wenn sich eine Stellung des Kupplungspedals ändert. Der Druck im Weichbereich wird nun zusätzlich durch eine Vorsteuerung der Steuervorrichtung in Abhängigkeit von dem Bewegungssignal eingestellt. Mit anderen Worten wird der hydraulische Druck nicht nur in Abhängigkeit von dem aktuellen Wert des Kuppelsignals (statische Größe) eingestellt, sondern zusätzlich wird auch bei einer zeitlichen Änderung des Kuppelpedals (dynamische Größe) ein Vorsteuersignal erzeugt, das den Druck in Abhängigkeit von der Änderung des Kuppelsignals einstellt. Die Vorsteuerung erzeugt dazu das Vorsteuersignal in Abhängigkeit von dem Bewegungssignal, d.h. der beschriebenen zeitlichen Ableitung. Durch die Steuervorrichtung werden das vorläufige Sollwertsignal und das Vorsteuersignal durch einen Addierer zu einem endgültigen Stellwertsignal für den Druck kombiniert. Erfindungsgemäß wird also die Hydraulikeinrichtung nun mittels des endgültigen Stellwertsignals gesteuert, anstelle nur mittels des vorläufigen Sollwertsignals.

Durch die Erfindung ergibt sich der Vorteil, dass im Weichbereich schneller oder heftiger oder mit einem größeren Volumenstrom hydraulische Flüssigkeit bewegt wird also ohne die Vorsteuerung. Damit reagiert die Getriebekupplung im Weichbereich mit einer geringeren Reaktionszeit auf das Kuppelsignal und kann hierdurch das Ausrückelement schneller auf die jeweilige zum aktuellen Wert des Kuppelsignals korrespondierende Endstellung bewegen als ohne Vorsteuerung.

Zu der Erfindung gehören auch optionale Weiterbildungen, durch deren Merkmale sich zusätzliche Vorteile ergeben.

Eine Weiterbildung sieht vor, dass durch die Vorsteuerung das Bewegungssignal (d.h. die zeitliche Ableitung des vorläufigen Sollwertsignals) mit einem Vorsteuerfaktor skaliert wird und dieser Vorsteuerfaktor in Abhängigkeit von zumindest einer Betriebsgröße des Kraftfahrzeugs eingestellt wird. Hierdurch wird in vorteilhafter Weise der Einfluss der Vorsteuerung von der Betriebsgröße des Kraftfahrzeugs abhängig ist. Eine Betriebsgröße ist im Zusammenhang mit der Erfindung eine Größe, die von einem aktuellen Betriebszustand des Kraftfahrzeugs abhängig ist.

Eine Weiterbildung sieht hierzu vor, dass die zumindest eine Betriebsgröße zumindest eine Temperatur umfasst. Hierdurch wird die Vorsteuerung temperaturabhängig. Dies kompensiert in vorteilhafter Weise das temperaturabhängige Verhalten der Getriebekupplungsansteuerung.

Eine Weiterbildung sieht vor, dass der Vorsteuerfaktor in Abhängigkeit von der zumindest einen Betriebsgröße mittels einer Zuordnungseinrichtung, insbesondere eines Kennfelds oder einer parametrischen Funktion, ermittelt wird und die Zuordnungseinrichtung im Betrieb des Kraftfahrzeugs in Abhängigkeit von der Zeitkonstante, mit welcher ein Zeitsignal des Drucks dem vorläufigen Sollwertsignal oder dem endgültigen Stellwertsignal folgt, adaptiert wird. Mit anderen Worten wird das Vorsteuerfaktor-Kennfeld online gemessen. Somit wird über die Laufzeit die Eigenschaft der Hardware online gelernt. Somit kann eine Bauteilstreuung kompensiert werden. Beispielsweise kann die Zeitkonstante mittels einer Sprungfunktion als Stellwertsignal gemessen werden.

Eine Weiterbildung sieht vor, dass der Vorsteuerfaktor in Abhängigkeit von einer Differenz zwischen dem aktuellen Druck und einem Druck, der sich im Steifpunkt ergibt, eingestellt wird. Hierdurch kann in vorteilhafter Weise die Vorsteuerung ausgeblendet oder graduell oder rampenförmig verringert werden, während sich das Ausrückelement dem Steifpunkt nähert.

Insbesondere ist in dem Zusammenhang vorgesehen, dass die Vorsteuerung nur im Weichbereich aktiv ist. Insbesondere ist die Vorsteuerung also nicht im Steifbereich aktiv. Hierdurch ergibt sich der Vorteil, dass das vorteilhafte Verhalten des Kupplungsgetriebes im Steifbereich unbeeinflusst bleibt.

Wie bereits ausgeführt, gehört zu der Erfindung auch die Steuervorrichtung für eine elektrohydraulische Getriebekupplung eines Kraftfahrzeugs. Die Steuervorrichtung weist den beschriebenen Stellausgang zum Stellen eines elektrischen Aktors zum Einstellen eines hydraulischen Drucks zum Bewegen eines Ausrückelements der Getriebekupplung auf. Die Steuervorrichtung ist dabei dazu eingerichtet, eine Ausführungsform des erfindungsgemäßen Verfahrens durchzuführen. Hierzu kann die Steuervorrichtung beispielsweise eine Prozessoreinrichtung aufweisen. Die Prozessoreinrichtung kann beispielsweise auf der Grundlage eines Mikrocontrollers oder eines Mikroprozessors realisiert sein. Die Reglereinrichtung und die Vorsteuerung können als Programmmodule der Prozessoreinrichtung bereitgestellt sein.

Schließlich gehört zu der Erfindung auch ein Kraftfahrzeug mit der elektrohydraulischen Getriebekupplung, bei welcher eine Ausführungsform der erfindungsgemäßen Steuervorrichtung bereitgestellt ist. Die Getriebekupplung weist des Weiteren den beschriebenen elektrischen Aktor zum Einstellen des hydraulischen Drucks auf, mittels welchem ein Ausrückelement der Getriebekupplung bewegt wird.

Im Folgenden ist ein Ausführungsbeispiel der Erfindung beschrieben. Es zeigen:
- Fig. 1: eine schematische Darstellung eines Kraftfahrzeugs, in welchem eine elektrohydraulische Getriebekupplung mit einer Steuervorrichtung bereitgestellt ist,
- Fig. 2: ein Diagramm mit zeitlichen Verläufen von Drucksignalen,
- Fig. 3: ein Diagramm mit zeitlichen Verläufen von Drucksignalen im Steifbereich bei einer periodischen Bewegung eines Kupplungspedals,
- Fig. 4: ein Diagramm mit zeitlichen Verläufen der Drucksignale im Weichbereich bei der periodischen Bewegung des Kupplungssignals,
- Fig. 5: eine schematische Darstellung einer Ausführungsform der erfindungsgemäßen Steuervorrichtung,
- Fig. 6: die Steuervorrichtung von Fig. 5 in einer konkreten Realisierungsform,
- Fig. 7: eine schematische Darstellung eines zeitlichen Verlaufs eines Drucksignals,
- Fig. 8: eine schematische Darstellung einer Kennlinie für einen Vorsteuerfaktor,
- Fig. 9: ein Diagramm mit zeitlichen Verläufen von Drucksignalen und eines Vorsteuersignals,
- Fig. 10: ein Diagramm mit zeitlichen Verläufen von Drucksignalen und dem Vorsteuersignal bei einer periodischen Bewegung eines Kupplungspedals.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

Im Folgenden sei angenommen, dass Fig. 1 nun eine Ausführungsform des erfindungsgemäßen Kraftfahrzeugs 1 repräsentiert. Für die Erläuterung der in Fig. 1 dargestellten Elemente sei daher auf die Einleitung der Beschreibung verwiesen. Ein Unterschied zur einleitenden Beschreibung ist, dass das Kraftfahrzeug 1 gemäß der Erfindung eine Ausführungsform der erfindungsgemäßen Steuervorrichtung 7 aufweist.

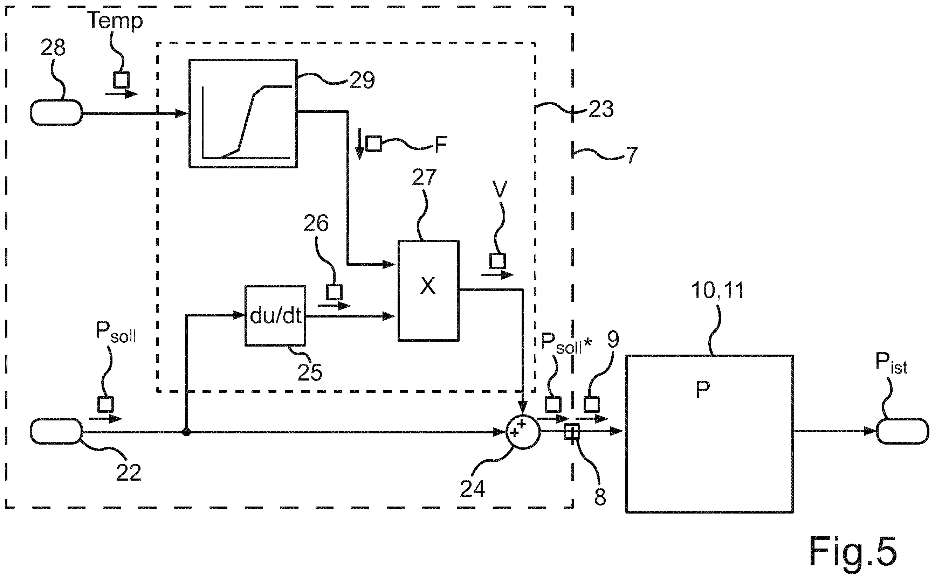

Fig. 5 zeigt hierzu die Steuervorrichtung 7, wie sie an die Regelstrecke angeschlossen ist, die aus dem Aktor 10 und dem hydraulischen Antrieb 11 gebildet ist. Die Steuervorrichtung 7 kann einen Istwert Pist des Druckes P für eine Regelung empfangen. Die Regelung kann in bekannter Weise durch eine Reglereinrichtung 22 durchgeführt werden. Es kann durch die Reglereinrichtung 22 auch eine einfache Steuerung beispielsweise durch einfaches Skalieren des Kuppelsignals 6 erfolgen. Die Steuervorrichtung 7 weist zusätzlich eine Vorsteuerung 23 auf. Ein vorläufiges Sollwertsignal Psoll der Reglereinrichtung 22 wird durch einen Addierer 24 mit einem Vorsteuersignal V zu einem endgültigen Stellwertsignal Psoll* kombiniert. Das endgültige Stellwertsignal Psoll* wird dann am Signalausgang 8 als Stellsignal 9 bereitgestellt. Hierbei kann dann beispielsweise eine Impedanzanpassung vorgesehen sein. In der beschriebenen Weise kann das vorläufige Sollwertsignal Psoll in Abhängigkeit von dem Kuppelsignal 6 erzeugt werden, welches die Pedalstellung des Kupplungspedals 3 während der Bewegung 4 kontinuierlich beschreibt.

Die Vorsteuerung 23 erzeugt aus dem vorläufigen Sollwertsignal Psoll mittels einer Ableitung 25 ein Ableitungssignal 26. Das Ableitungssignal 26 weist somit immer dann einen Wert ungleich 0 auf, wenn sich die Stellung des Kupplungspedals 3 ändert. Das Ableitungssignal 26 wird durch einen Multiplizierer 27 mit einem Vorsteuerfaktor F multipliziert, wobei das sich ergebende Produkt das Vorsteuersignal V ergibt. Der Vorsteuerfaktor F wird in Abhängigkeit von zumindest einer Betriebsgröße des Kraftfahrzeugs 1 eingestellt. Eine Betriebsgröße ist in dem Beispiel eine Temperatur Temp, die an einem Messeingang 28 beispielsweise von einem Temperatursensor 28 erfasst werden kann. Die Temperatur Temp beschreibt insbesondere die Temperatur eines Hydrauliköls.

Der Vorsteuerfaktor F kann auf der Grundlage eines Kennlinienfelds 29 gebildet werden, aus welchem abhängig von der Temperatur Temp eine Kennlinie ausgewählt werden kann. Eine weitere Betriebsgröße kann beispielsweise der aktuelle Druckwert Pist sein, der angibt, wie weit der aktuelle Druck Pist vom Steifpunkt 21 entfernt ist. Hierzu kann eine Differenz ΔP als Differenz zwischen dem Steifpunkt 21 und dem aktuellen Druck Pist berechnet werden.

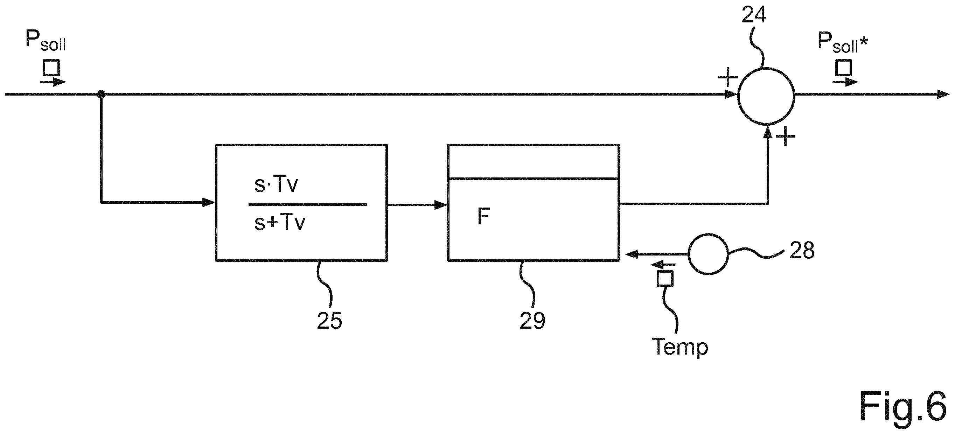

Fig. 6 zeigt, wie die Ableitung 25 in einer Realisierung der Steuervorrichtung 7 auf der Grundlage eines Filters realisiert werden kann, wobei ein geeigneter Wert für die Zeitkonstante Tv durch einfache Versuche ermittelt werden kann.

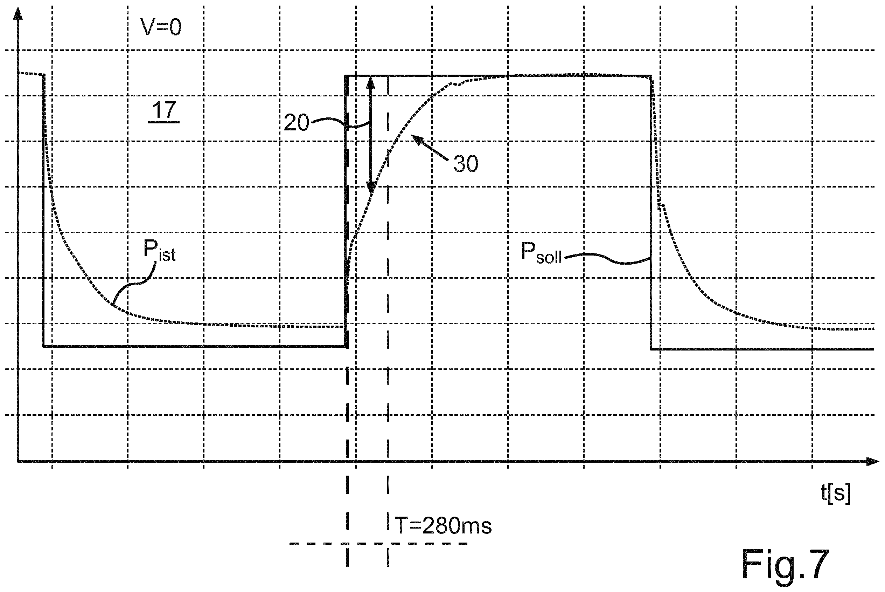

Fig. 7 veranschaulicht, wie bei ausgeschalteter Vorsteuerung 23 (angedeutet als V = 0) der aktuelle Druckwert Pist im Weichbereich 17 auf einen Sprung oder einen Rechteckverlauf des Sollwertsignals Psoll reagiert. Anhand des Verlaufs des aktuellen Drucks Pist ist erkennbar, dass Teilsysteme wichtig für den Druckaufbau im Weichbereich 17 sind. Diese Teilsysteme sind die Kupplung mit der Bewegung des Kupplungskolbens (PT2-Glied, Zeitkonstante circa 2 Millisekunden), die Ventilbewegung mit seiner Translationsbewegung zum Einstellen des Drucks (PT2-Glied, Zeitkonstante circa 8 bis 13 Millisekunden) und das Druckaufbauverhalten der Getriebekupplung mit der Volumenstrom-Druck-Verstärkung (PT1-Glied mit Zeitkonstante im Bereich 220 Millisekunden bis 280 Millisekunden). Der Volumenstrom beschreibt die Menge an hydraulischer Flüssigkeit, die für eine Veränderung des Druckes P nötig ist.

Anhand der Zeitkonstanten der unterschiedlichen Teilsysteme ist ersichtlich, dass der Druckaufbau im Vergleich besonders langsam beziehungsweise dominant ist. Die physikalische Interpretation hierzu ist, dass für das Erreichen eines Druckdeltas im Weichbereich 17 ein deutlich höherer Volumenstrom benötigt wird als im Steifbereich 18. Im Weichbereich 17 ist also eine Volumenstrom-Druck-Verstärkung kleiner als im Steifbereich 18. Somit kann durch Kompensation dieser Dynamik das Druckfolgeverhalten optimiert werden. Man verringert die dominante Dynamik des Druckaufbaus, also das PT1-Glied (Zeitglied erster Ordnung) mit seinem exponentiellen Verhalten 30, um so den Schleppfehler 20 zu verringern. Anhand des zeitlichen Verlaufs des exponentiellen Anstiegs 30 kann ermittelt werden, dass für die spezifische Getriebekupplung 2 eine Zeitkonstante T = 280 Millisekunden für das PT1-Verhalten gilt. Anhand der Zeitkonstante T kann der Vorsteuerfaktor F festgelegt werden. So kann durch diese einfache Messung für unterschiedliche Getriebekupplungen jeweils ein geeignetes Kennfeld 29 erzeugt werden, um den jeweiligen Schleppfehler 20 kompensieren zu können.

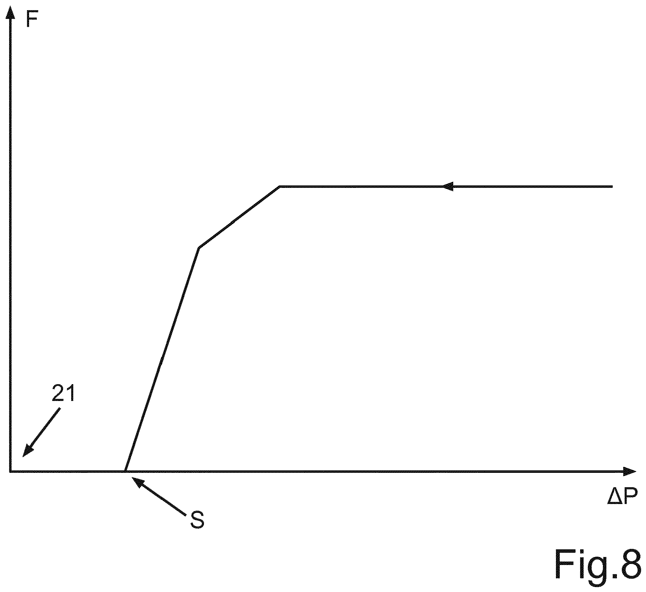

Fig. 8 veranschaulicht, wie in vorteilhafter Weise nicht nur die Nichtlinearität des PT1-Verhaltens kombiniert werden kann, sondern auch eine Rücknahme der Kompensation bei Annäherung an den Steifpunkt bewirkt werden kann. Bei steigendem Druck P verringert sich die Druckdifferenz ΔP und der Vorsteuerfaktor F wird hierbei graduell verringert, bis bei einem Schwellenwert S der Vorsteuerfaktor F auf 0 reduziert ist. Der Schwellenwert S kann in einem Bereich von 0 bar bis 0,2 bar liegen, beispielsweise 0,1 bar betragen.

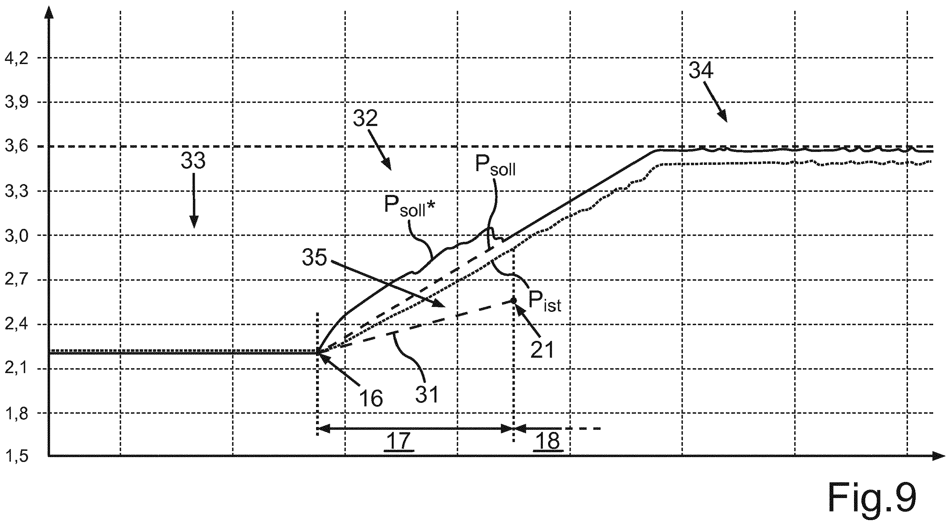

Fig. 9 veranschaulicht, wie mit der beschriebenen Konfiguration ein zeitlicher Verlauf des aktuellen Drucks Pist erreicht werden kann, der im Weichbereich 17 und im Steifbereich 18 ähnlich ist. Hierzu ist weiter veranschaulicht, wie im Unterschied zum Sollwertsignal Psoll der zeitliche Verlauf des endgültigen Stellwertsignals Psoll* verläuft. Zu sehen ist, dass das endgültige Stellwertsignal Psoll* einen größeren Volumenstrom der hydraulischen Flüssigkeit in dem hydraulischen Antrieb 11 verursacht. Als weitere Referenz ist der ursprüngliche Verlauf 31 des aktuellen Drucks Pist veranschaulicht, wie er bereits im Zusammenhang mit Fig. 2 erläutert worden ist.

Insgesamt ergibt sich so für den Benutzer des Kraftfahrzeugs während eines gesamten Auskoppelvorgangs 32 ausgehend vom eingekoppelten Zustand 33 über den Greifpunkt 16 durch den Weichbereich 17 hindurch über den Steifpunkt 21 in den Steifbereich 18 hinein bis zum ausgekoppelten Zustand 34 ein gleichbleibendes Verhalten der Getriebekupplung 2.

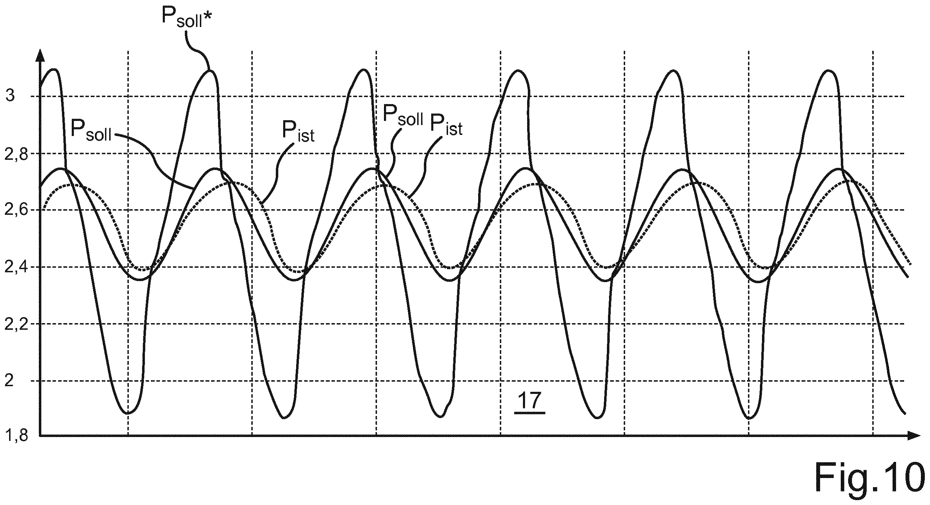

Fig. 10 veranschaulicht noch einmal im Vergleich zu Fig. 4 das Verhalten der Getriebekupplung 2 bei periodischer Anregung. Dargestellt ist das endgültige Stellwertsignal Psoll* und das resultierende aktuelle Drucksignal Pist, das nun ähnlich wie im Steifbereich 18 auch im Weichbereich 17 dem vorläufigen Sollwertsignal Psoll mit geringerem Schleppfehler 20 folgt. Durch die gezielte Vorsteuerung der dominanten Dynamik ist es nun möglich, im Weichbereich 17 ein deutlich erhöhtes Druckfolgeverhalten zu gewährleisten, sodass man eine Bandbreitenerhöhung für beispielsweise periodische Bewegungen von 1 Hertz auf bis zu 10 Hertz erzielen kann. Es ergibt sich so eine gesteigerte Robustheit in der Schaltqualität über die Streubreite der Weichbereiche 17 unterschiedlicher Getriebekupplungen. Der typische sich ergebende Druckbauch 35 bei Applikationen, wie beispielsweise Ankriechrampen, Anfahren oder Überschneidungen ist vermieden.

Insgesamt zeigt das Beispiel, wie durch die Erfindung eine adaptive Vorsteuerung zur Kompensation eines Kupplungsweichbereichs bereitgestellt werden kann.

## Patentansprüche

1. Verfahren zum Betreiben einer elektrohydraulischen Getriebekupplung (2) eines Kraftfahrzeugs (1), wobei bei einem Kuppelvorgang (32) durch eine Reglereinrichtung (22) einer Steuervorrichtung (7) in Abhängigkeit von einem Kuppelsignal (6) ein hydraulischer Druck (P) eingestellt wird und durch den Druck (P) ein Ausrückelement (12) der Getriebekupplung (2) durch einen Weichbereich (17) hindurch über einen Steifpunkt (21) in einen Steifbereich (18) oder umgekehrt bewegt wird und hierzu die Reglereinrichtung (22) in Abhängigkeit von dem Kuppelsignal (6) ein vorläufiges Sollwertsignal (Psoll) für den Druck (P) erzeugt, wobei das Sollwertsignal (Psoll) der Reglereinrichtung (22) deren Ausgabesignal ist, mittels welchem eine Hydraulikeinrichtung zum Einstellen des Drucks (P) gesteuert wird,
**dadurch gekennzeichnet, dass**
eine zeitliche Ableitung (26) des vorläufigen Sollwertsignals (Psoll) als ein Bewegungssignal (26) erzeugt wird, welches immer dann einen Wert ungleich 0 aufweist, wenn sich eine Stellung eines Kupplungspedals ändert und welches durch einen Multiplizierer (27) mit einem Vorsteuerfaktor (F) multipliziert wird, wobei das sich ergebende Produkt ein Vorsteuersignal (V) ergibt, und dass das vorläufige Sollwertsignal (Psoll) und das Vorsteuersignal (V) durch einen Addierer (24) zu einem endgültigen Stellwertsignal (Psoll*) für den Druck (P) kombiniert werden.

2. Verfahren nach Anspruch 1, wobei durch die Vorsteuerung (23) das Bewegungssignal (26) mit dem Vorsteuerfaktor (F) skaliert wird und der Vorsteuerfaktor (F) in Abhängigkeit von zumindest einer Betriebsgröße des Kraftfahrzeugs (1) eingestellt wird.

3. Verfahren nach Anspruch 2, wobei als die zumindest eine Betriebsgröße zumindest eine Temperatur (Temp) erfasst wird.

4. Verfahren nach Anspruch 2 oder 3, wobei der Vorsteuerfaktor in Abhängigkeit von der zumindest einen Betriebsgröße mittels einer Zuordnungseinrichtung, insbesondere eines Kennfelds oder einer parametrischen Funktion, ermittelt wird und die Zuordnungseinrichtung im Betrieb des Kraftfahrzeugs in Abhängigkeit von einer Zeitkonstante, mit welcher ein Zeitsignal (Pist) des Drucks (P) dem vorläufigen Sollwertsignal (Psoll) oder dem endgültigen Stellwertsignal (Psoll*) folgt, adaptiert wird.

5. Verfahren nach einem der vorhergehenden Ansprüche, wobei der Vorsteuerfaktor (F) in Abhängigkeit von einer Differenz (ΔP) zwischen dem aktuellen Druck (Pist) und einem Druck, der sich im Steifpunkt (21) ergibt, eingestellt wird.

6. Verfahren nach einem der vorhergehenden Ansprüche, wobei die Vorsteuerung (23) nur in dem Weichbereich (17) aktiv ist.

7. Steuervorrichtung (7) für eine elektrohydraulische Getriebekupplung (2) eines Kraftfahrzeugs (1), mit einem Stellausgang (8) zum Stellen eines elektrischen Aktors (10) zum Einstellen eines hydraulischen Drucks (P) zum Bewegen eines Ausrückelements (12) der Getriebekupplung (12), wobei die Steuervorrichtung (7) dazu eingerichtet ist, ein Verfahren nach einem der vorhergehenden Ansprüche durchzuführen.

8. Kraftfahrzeug (1) mit einer elektrohydraulischen Getriebekupplung (2), bei welcher eine Steuervorrichtung (7) nach Anspruch 7 mit einem elektrischen Aktor (10) zum Einstellen eines hydraulischen Drucks (P) zum Bewegen eines Ausrückelements (12) der Getriebekupplung (2) gekoppelt ist.

## Claims

1. Method for operating an electrohydraulic transmission clutch (2) of a motor vehicle (1), wherein during a coupling process (32) by means of a regulator device (22) of a control device (7) depending on a coupling signal (6) a hydraulic pressure (P) is set and by means of the pressure (P) a disengagement element (12) of the transmission clutch (2) is moved through a soft area (17) over a rigid point (21) into a rigid area (18) or vice versa and for this purpose the regulator device (22) depending on the coupling signal (6) generates a provisional setpoint signal (Psoll) for the pressure (P), wherein the setpoint signal (Psoll) of the regulator device (22) is its output signal, by means of which a hydraulic device is controlled for setting the pressure (P),
**characterised in that**
a temporal derivative (26) of the provisional setpoint signal (Psoll) as a motion signal (26) is generated, which always has a value unequal to 0 when a position of a coupling pedal changes, and which is multiplied by a multiplier (27) having a pre-control factor (F), wherein the resulting product results in a pre-control signal (V), and that the provisional setpoint signal (Psoll) and the pre-control signal (V) are combined by an adder (24) to form a final actuating value signal (Psoll*) for the pressure (P).

2. Method according to claim 1, wherein by means of the pre-controlling (23) the motion signal (26) is scaled with the pre-control factor (F) and the pre-control factor (F) is set depending on at least one operating parameter of the motor vehicle (1).

3. Method according to claim 2, wherein as the at least one operating parameter at least one temperature (Temp) is detected.

4. Method according to claim 2 or 3, wherein the pre-control factor is determined depending on the at least one operating parameter by means of an assigning means, in particular a characteristic field or a parametric function, and the assigning means is adapted in the operation of the motor vehicle depending on a temporal constant, with which a temporal signal (Pist) of the pressure (P) follows the provisional setpoint signal (Psoll) or the final setpoint signal (Psoll*).

5. Method according to any of the preceding claims, wherein the pre-control factor (F) is set depending on a difference (ΔP) between the actual pressure (Pist) and a pressure which results in the rigid point (21).

6. Method according to any of the preceding claims, wherein the pre-controlling (23) is active only in the soft area (17).

7. Control device (7) for an electrohydraulic transmission clutch (2) of a motor vehicle (1), having an actuating output (8) for actuating an electrical actor (10) for setting a hydraulic pressure (P) for moving a disengagement element (12) of the transmission clutch (12), wherein the control device (7) is configured to carry out a method according to any of the preceding claims.

8. Motor vehicle (1) having an electrohydraulic transmission clutch (2) in the case of which a control device (7) according to claim 7 is coupled with an electrical actor (10) for setting a hydraulic pressure (P) for moving a disengagement element (12) of the transmission clutch (2).

## Revendications

1. Procédé de fonctionnement d'un embrayage de boîte de vitesses électrohydraulique (2) d'un véhicule automobile (1), dans lequel lors d'une opération d'embrayage (32), une pression hydraulique (P) est réglée par un dispositif de régulation (22) d'un dispositif de commande (7) en fonction d'un signal d'embrayage (6) et un élément de débrayage (12) de l'embrayage de boîte de vitesses (2) est déplacé par la pression (P) à travers une zone souple (17) au-delà d'un point de rigidité (21) dans une zone rigide (18) ou inversement et pour ce faire, le dispositif de régulation (22) génère un signal de valeur de consigne provisoire (Psoll) pour la pression (P) en fonction du signal d'embrayage (6), dans lequel le signal de valeur de consigne (Psoll) du dispositif de régulation (22) est son signal de sortie, au moyen duquel un dispositif hydraulique est commandé pour le réglage de la pression (P),
**caractérisé en ce que**
une dérivée de temps (26) du signal de valeur de consigne provisoire (Psoll) est générée en tant que signal de déplacement (26), lequel présente toujours une valeur différente de 0, lorsqu'une position d'une pédale d'embrayage change et lequel est multiplié par un multiplicateur (27) avec un facteur de commande pilote (F), dans lequel le produit en résultant donne un signal de commande pilote (V), et que le signal de valeur de consigne provisoire (Psoll) et le signal de commande pilote (V) sont combinés par un additionneur (24) en un signal de valeur de réglage final (Psoll*) pour la pression (P).

2. Procédé selon la revendication 1, dans lequel le signal de déplacement (26) est mis à l'échelle avec le facteur de commande pilote (F) par la commande pilote (23) et le facteur de commande pilote (F) est réglé en fonction d'au moins une grandeur de fonctionnement du véhicule automobile (1).

3. Procédé selon la revendication 2, dans lequel au moins une température (Temp) est détectée en tant que l'au moins une grandeur de fonctionnement.

4. Procédé selon la revendication 2 ou 3, dans lequel le facteur de commande pilote est déterminé en fonction de l'au moins une grandeur de fonctionnement au moyen d'un dispositif d'affectation, en particulier d'un diagramme caractéristique ou d'une fonction paramétrique, et le dispositif d'affectation est adapté pendant le fonctionnement du véhicule automobile en fonction d'une constante de temps, avec laquelle un signal de temps (Pist) de la pression (P) suit le signal de valeur de consigne provisoire (Psoll) ou le signal de valeur de réglage final (Psoll*).

5. Procédé selon l'une quelconque des revendications précédentes, dans lequel le facteur de commande pilote (F) est réglé en fonction d'une différence (ΔP) entre la pression actuelle (Pist) et une pression, qui résulte dans le point de rigidité (21).

6. Procédé selon l'une quelconque des revendications précédentes, dans lequel la commande pilote (23) est active uniquement dans la zone souple (17).

7. Dispositif de commande (7) pour un embrayage de boîte de vitesses électrohydraulique (2) d'un véhicule automobile (1), avec une sortie de réglage (8) pour le réglage d'un actionneur électrique (10) pour le réglage d'une pression hydraulique (P) pour le déplacement d'un élément de débrayage (12) de l'embrayage de boîte de vitesses (12), dans lequel le dispositif de commande (7) est aménagé pour effectuer un procédé selon l'une quelconque des revendications précédentes.

8. Véhicule automobile (1) avec un embrayage de boîte de vitesses électrohydraulique (2), dans lequel un dispositif de commande (7) selon la revendication 7 est couplé à un actionneur électrique (10) pour le réglage d'une pression hydraulique (P) pour le déplacement d'un élément de débrayage (12) de l'embrayage de boîte de vitesses (2).
